# EUROPEAN PATENT APPLICATION

(11) **EP 3 151 549 A1**
(43) Date of publication of application: **05.04.2017**
(21) Application number: 15187467.4
(22) Date of filing: 29.09.2015
(51) Int. Cl.: H04N 5/782, H04N 21/81

(54) **A DIGITAL VIDEO RECORDER AND A METHOD FOR DYNAMIC MANAGEMENT OF ADVERTISING CONTENT ON A DIGITAL VIDEO RECORDER**

(71) Applicant: Advanced Digital Broadcast S.A., 1292 Chambesy (CH)
(72) Inventor: Jankowski, Bartosz, 65-119 Zielona Gora (PL)
(74) Representative: Kancelaria Eupatent.pl Sp. z.o.o

(57) **Abstract**

A method for dynamic management of advertising content on a digital video recorder. The method comprises recording content received by the digital video recorder, the recording comprising the steps of: starting recording (201) of the received content; detecting (202) a commercial break start; stopping recording (203) of the received content; detecting (205) a commercial break end; resuming recording (206) of the received content; such as to record a main content corresponding to the received content in periods other than commercial breaks. The method also comprises displaying the recorded main content, the displaying comprising the steps of: initiating (401) a display of the main content; selecting (403) an advertising clip; stopping the display of the main content to display (404) the advertising clip; and resuming (405) the display of the main content.

## Description

### TECHNICAL FIELD

The present invention relates to dynamic management of advertising content on a digital video recorder.

### BACKGROUND

A digital video recorder (DVR), also called a personal video recorder (PVR) is a consumer electronics device or application software operated on a general purpose computer that allows to record received multimedia content (such as live television content or other broadcast streams) on a mass storage memory. A DVR device typically records content on request (e.g. by the user pressing a "record" button) or can be programmed to record at a specific time of day or record a specific program selected from an electronic program guide (EPG).

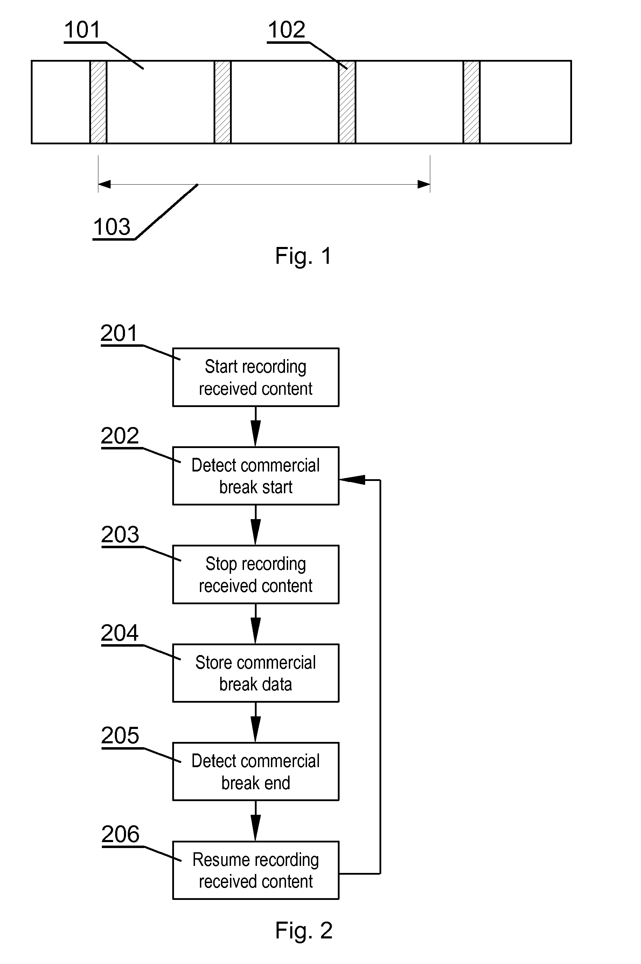

The received content to be recorded often contains additional advertising content, such as an advertising clip or a set of consecutive clips inserted periodically to the main content during so-called commercial breaks. Typically, the original content is split into sections by the broadcaster and the sections are interleaved with advertising clips. The original content can be split to equal-length sections or split at particular points of interest, as suggested by the content producer. Fig. 1 shows a typical main content split into equal-length sections 101 (herein called main content sections) with advertising clips 102 (hereinafter called commercial breaks) insert between the original content sections.

When the received content is recorded by the DVR device, several problems may occur. One problem is that the recording 103 may start in the middle of a commercial break 102, which disrupts the viewing experience of the advertising clip when the recorded content is displayed. Another problem is that some advertisements may become outdated after some time. For example, content broadcast during Christmas season may contain advertisements that are out of interest for the viewer when the content is displayed several months later. Similarly, advertising related to special, time-limited offers may be outdated after the expiry of the time limit of the offer, while still being displayed together with the original recording.

Therefore, there is a need to improve the methods of management of advertising content on a digital video recorder.

### SUMMARY

There is presented a method for dynamic management of advertising content on a digital video recorder. The method comprises recording content received by the digital video recorder, the recording comprising the steps of: starting recording of the received content; detecting a commercial break start; stopping recording of the received content; detecting a commercial break end; resuming recording of the received content; such as to record a main content corresponding to the received content in periods other than commercial breaks. The method further comprises displaying the recorded main content, the displaying comprising the steps of: initiating a display of the main content; selecting an advertising clip; stopping the display of the main content to display the advertising clip; and resuming the display of the main content.

Preferably, the method further comprises, while recording received content, creating a commercial break data set comprising at least the start time of the commercial break.

Preferably, the commercial break data set further comprises at least one of: the end time of the commercial break, advertising content type, advertisement identifier, advertiser identifier, display frequency.

Preferably, while displaying the recorded main content, the display of the advertising clip is performed at the start time of the commercial break stored in the commercial break data set associated with the main content.

Preferably, while displaying the recorded main content, the display of the advertising clip is performed after a predetermined time has elapsed from the start of display of the main content.

Preferably, the method comprises selecting a random advertising clip.

Preferably, the method comprises selecting an advertising clip having the same identifier as specified in the commercial break data set associated with the main content.

Preferably, the method comprises selecting an advertising clip having the same advertiser identifier as specified in the commercial break data set associated with the main content.

Preferably, the method comprises selecting an advertising clip according to user profile.

There is also presented a computer program comprising program code means for performing all the steps of the computer-implemented method as described above when said program is run on a computer, as well as a computer readable medium storing computer-executable instructions performing all the steps of the computer-implemented method as described above when executed on a computer.

There is also presented a digital video recorder device, comprising: a multimedia content receiver, a content storage configured to store: multimedia content received by the multimedia content receiver; commercial breaks data; advertising clips; and a processor configured to perform the method as described above.

### BRIEF DESCRIPTION OF DRAWINGS

These and other objects of the invention presented herein are accomplished by providing a device and method for dynamic management of advertising content on a digital video recorder. Further details and features of the present invention, its nature and various advantages will become more apparent from the following detailed description of the preferred embodiments shown in a drawing, in which:
Fig. 1 shows schematically the received content contents;
Fig. 2 shows a method for recording content;
Fig. 3

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DETAILED DESCRIPTION

Fig. 2 shows an example of one method of recording content that is applicable for a DVR device. In step 201, the recording of the received content is initiated. It can be initiated manually by the user e.g. by pressing a "record" button of a control interface (e.g. a remote control unit), or automatically according to a predefined time or content schedule. The recording is effected for example by creating a file at a mass storage available to the DVR device. While the content is received and stored, it is analyzed to detect in step 202 a start of a commercial break. This can be effected e.g. by monitoring the content metadata to detect special commercial break tags (if available in the stream) or by multimedia recognition algorithms that detect specific frames or frame sequences present between the main content and the advertising clip. Then, the recording of the received content is stopped in step 203 and commercial break data is stored in step 204, as described in details below. Next, the procedure monitors the received content to detect the end of the commercial break in step 205. Then it resumes recording of the received content in step 206 and returns to step 202. A commercial break is understood herein as a period of time during which an advertising clip is present in the received stream.

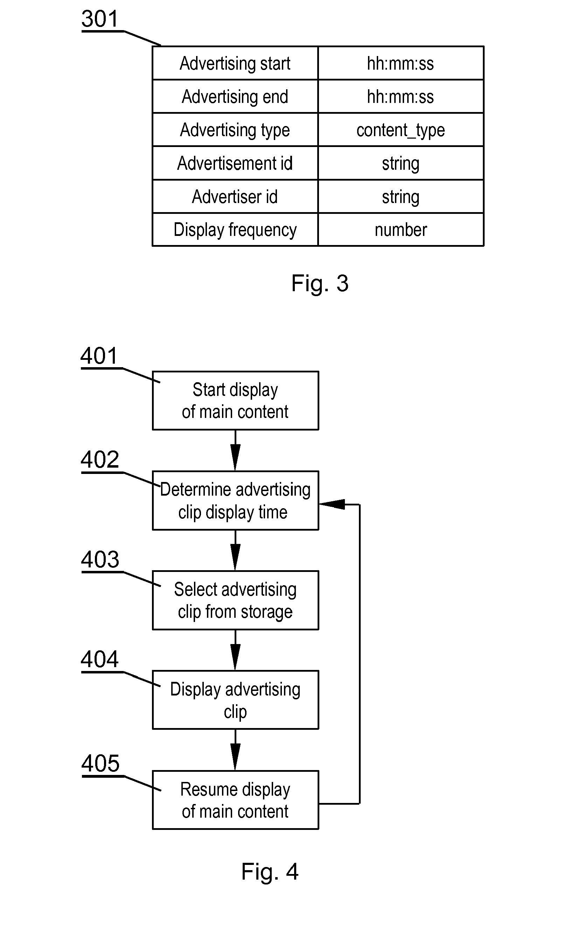

In step 204, a commercial break data set is stored, for example as a separate file comprising a set of records that define at what time of the main content the advertising clips were present and what was their type. An exemplary record 301 format is shown in Fig. 3. For example, the record may include the start and end time of the commercial break (as the time of the recorded main content), the type of advertising content (as at least one of predefined content types, e.g. adult/child, household/food/automotive), a reference to a specific advertising clip in the original content (to allow to change the clip to a current one), or a reference to a specific advertiser (to allow the advertiser to change its clips). The commercial break data can be also stored as a metadata part of the main recording. One record may be created for each advertising clip that was present in the received content. At least the advertising clip start times are stored, the other information is optional. It may happen that there are a plurality of advertising clips present, one adjacent to another - in that case, preferably a plurality of commercial break data sets are stored, each for a separate advertising clip.

The advertisement identifier may specify one or more values, such as to allow the particular advertisement to replace one or more advertisements in original content. For example, if a particular advertiser updates its advertisements each month, the advertisings of this advertiser may have consecutive numbers AD1, AD2, AD3, ..., AD12 - in that case, a current advertising clip stored in the advertising clips database 623 may have advertisement identifier equal to e.g. AD1, AD2, AD3 to replace the advertisements present in the first three months of broadcast of the original content.

Therefore, once the content is stored in accordance with the procedure of Fig. 2, there is recorded the main content and the information about advertising clips that were present in the main content.

The content can then be displayed (in other words: reproduced, played back) by the DVR device according to the procedure of Fig. 4. The procedure is initiated in step 401 by the user that indicates the DVR device to start display of selected content recorded according to the procedure of Fig. 2. The main content is displayed until it is determined that an advertising clip shall be displayed in step 402. Information about the start time of advertising clip display can be read from the commercial breaks file or metadata of the stored main content as described with reference to Fig. 3. Then, an advertising clip is selected in step 403 from the advertising clips database. Selection criteria are defined in details below. The display of the main content is paused and the selected advertising clip is displayed in step 404. Next, the display of the main content is resumed in step 405 and the procedure returns to step 402 to monitor further advertising clip tags.

In yet alternative embodiment, the advertising clip display times determined in step 402 may be different than the commercial breaks of the original content. For example, the amount of advertising material can be selected depending on the subscription profile of the user - users paying more for services may be provided with less amount of advertising. For example, a user with a higher subscription level may be presented with 1 advertisement per 30 minutes, and a user with a lower subscription level may be presented with 2 advertisements per 30 minutes or 1 advertisement per 15 minutes. In other words, the display of the advertising clip can be performed after a predetermined time has elapsed from the start of display of the main content (the time can be longer for users with higher subscription level).

In another embodiment, each advertising clip may have assigned a value of a display frequency, as shown in the last row of the table of Fig. 3. For example, if a first advertising clip has a display frequency equal to 2 and a second advertising clip has a display frequency equal to 1, the first advertising clip shall be displayed twice as often as the second advertising clip.

Alternatively, the display frequency can be assigned to a particular advertiser, indicating how often advertising clips of that particular advertiser shall be displayed as compared to other advertisers.

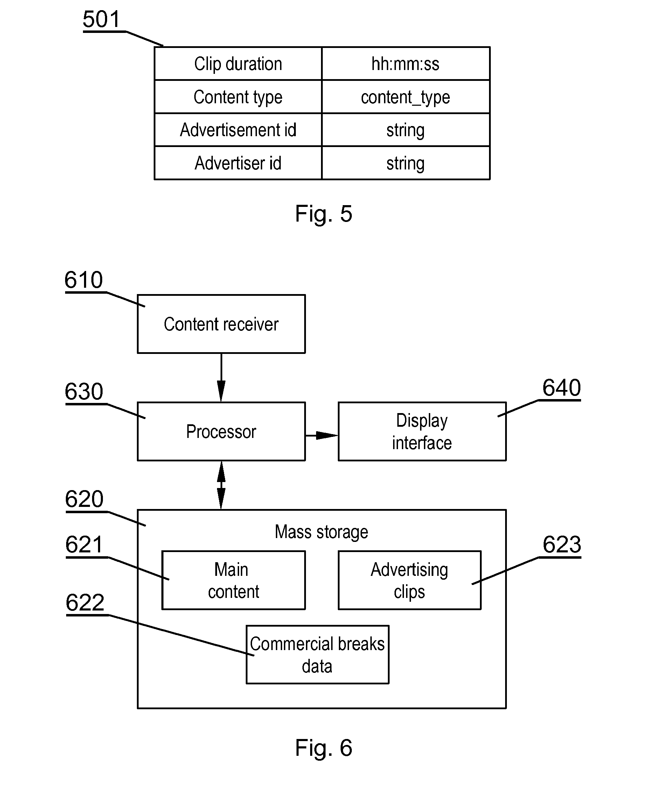

The advertising clips are selected from advertising clips storage. The advertising clips may be stored as separate files, each having its descriptors, the descriptors having a format 501 as specified in Fig. 5. Each clip may have specified a duration (e.g. specified in minutes and seconds), content type (in a manner equivalent to the content types of Fig. 3), advertisement identifier or advertiser identifier.

When selecting advertising clip to be displayed in step 403, at least one of the following criteria can be used:
- select a random advertising clip
- select an advertising clip having the same id as specified for the commercial break data defined for the main content (this allows the advertising clips to be dynamically updated);
- select an advertising clip of an advertiser having the same id as specified for the commercial break data defined for the main content (this allows the advertiser to keep an up-to-date set of advertising clips);
- select an advertising clip depending on user profile (defining the types of advertising that the user is most likely interested in)

Fig. 6 presents a schematic structure of the DVR device employing the methods as described herein. The device comprises a content receiver 610, for example a cable, satellite, terrestrial or IP television tuner, or any other receiver of multimedia streams. A content storage 620 is used to store:
- multimedia content 621 received by the multimedia content receiver 610 and recorded as the main content;
- commercial breaks data 622 defined during step 204 or dynamically depending on the subscription profile of the user;
- advertising clips 623.

The content storage 620 may be installed physically in the DVR device (e.g. a built-in hard disk drive or solid state memory chip). Alternatively, the content storage 620 may be external memory accessible over a network connection.

A processor 630 is used to perform the methods of Figs. 2 and 4.

The multimedia content is displayed via a display interface 640.

The DVR device further comprises standard components, such as a control interface for controlling the device by the user (e.g. a remote control unit (RCU), a touch input interface, a gesture interface), a memory for storing applications to be executed by the processor, input/output ports for communicating with other devices etc. - which are not shown for clarity purposes.

The presented device and method enable improved management of advertising content:
- providing advertising content to the user that is up to date and in line with user interests;
- reducing space required to store data on the mass storage at the DVR device by storing separately the main content and advertising content that can be used repeatedly for different main contents;
- reproducing advertising content in full, eliminating the problem of cropped advertising clips at the beginning of the recording.
Therefore, the invention provides a useful, concrete and tangible result.

The presented device and method invention are implemented as a computer system, which processes and transforms digital data files representing main content and advertising content. Thus, the machine or transformation test is fulfilled and the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for managing advertising content may be fully or partially performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for dynamic management of advertising content on a digital video recorder, the method comprising:
- recording content received by the digital video recorder, the recording comprising the steps of:
- starting recording (201) of the received content;
- detecting (202) a commercial break start;
- stopping recording (203) of the received content;
- detecting (205) a commercial break end;
- resuming recording (206) of the received content;
- such as to record a main content corresponding to the received content in periods other than commercial breaks;
- and displaying the recorded main content, the displaying comprising the steps of:
- initiating (401) a display of the main content;
- selecting (403) an advertising clip;
- stopping the display of the main content to display (404) the advertising clip;
- and resuming (405) the display of the main content.

2. The method according to claim 1, further comprising, while recording received content, creating a commercial break data set (301) comprising at least the start time of the commercial break.

3. The method according to claim 2, wherein the commercial break data set (301) further comprises at least one of: the end time of the commercial break, advertising content type, advertisement identifier, advertiser identifier, display frequency.

4. The method according to any of claims 2-3, wherein while displaying the recorded main content, the display (404) of the advertising clip is performed at the start time of the commercial break stored in the commercial break data set (301) associated with the main content.

5. The method according to any of previous claims, wherein while displaying the recorded main content, the display (404) of the advertising clip is performed after a predetermined time has elapsed from the start of display of the main content.

6. The method according to any of previous claims, comprising selecting (403) a random advertising clip.

7. The method according to any of claims 3-5, comprising selecting (403) an advertising clip having the same identifier as specified in the commercial break data set (301) associated with the main content.

8. The method according to any of claims 3-5, comprising selecting (403) an advertising clip having the same advertiser identifier as specified in the commercial break data set (301) associated with the main content.

9. The method according to any of claims 3-5, comprising selecting (403) an advertising clip according to user profile.

10. A computer program comprising program code means for performing all the steps of the computer-implemented method according to any of claims 1-9 when said program is run on a computer.

11. A computer readable medium storing computer-executable instructions performing all the steps of the computer-implemented method according to any of claims 1-9 when executed on a computer.

12. A digital video recorder device, comprising:
- an multimedia content receiver (610),
- a content storage (620) configured to store:
- multimedia content (621) received by the multimedia content receiver (610);
- commercial breaks data (622);
- advertising clips (623);
- and a processor (630) configured to perform the method of any of claims 1 - 9.
